# EUROPEAN PATENT SPECIFICATION

(11) **EP 0 753 391 B1**
(45) Date of publication and mention of the grant of the patent: **19.09.2001**
(21) Application number: 96305126.3
(22) Date of filing: 11.07.1996
(51) Int. Cl.: B29C 47/32, B29C 47/06

(54) **Elastomer extruding apparatus**
Extrusionsvorrichtung für Elastomer
Appareil d'extrusion pour élastomère

(30) Priority: 13.07.1995 JP 17767395; 13.07.1995 JP 17767495
(43) Date of publication of application: 15.01.1997
(73) Proprietor: Sumitomo Rubber Industries Ltd., Kobe-shi, Hyogo 651 (JP)
(72) Inventor: Ooki, Masahiko, Toyota-shi, Aichi-ken (JP); Yamamori, Shuichi, Asahigaoka, Toyota-shi, Aichi-ken (JP)
(74) Representative: Stewart, Charles Geoffrey

(56) References cited:
- GB-A- 1 230 869
- US-A- 3 871 810
- US-A- 4 526 528
- US-A- 4 683 095
- KAUTSCHUK UND GUMMI, vol. 37, no. 6, June 1984, HEIDELBERG DE, pages 505-508, XP002015848 W. MAY: "Das Einwalzenkopf-System EWK - eine neue Technologie in der Kautschukverarbeitung"

## Description

The present invention relates to an elastomer extruding apparatus capable of forming elastomer products formed in multiple layers by plural extruders at high precision, and particularly intended for forming thin products.

To form elastomer products of multiple layers by laminating elastomer materials having different properties, a multiplex extruding apparatus comprising two or more extruders is used.

Such a multiplex extruding apparatus is disclosed, for example, in German patent number DE 3521643, wherein elastomer materials extruded from extruders discharges through one nozzle in order to form layers of a long band or sheet continuously.

When formed by using the apparatus of such constitution, however, for example, when forming thin elastomer products such as an inner-liner rubber for a pneumatic tire, it is difficult to obtain the dimensions and precision needed.

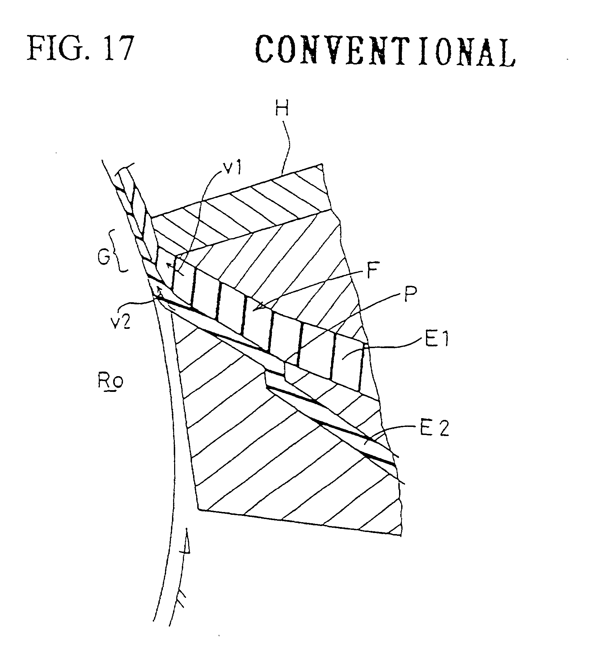

On the other hand, United States Patent 4,683,095 discloses, as shown in Fig. 17, an apparatus provided with a roll at the extrusion end of the apparatus for enhancing product precision, especially the thickness precision.

This apparatus has a convergent passage F in which elastomer materials E1, E2 extruded from two extruders are joined at a converging point P disposed in the midst of the die and moved forward while laminating, and a finishing chamber G composed of a tiny gap between a head H a and roller R0 which is provided at the down-stream side of the convergent passage F.

In the converging passage F the two elastomers E1, E2 advance at nearly the same speed, but in the finishing chamber G, since the lower elastomer material E2 contacts the roller R0, it is pulled by the rotation of the roller R0, and fed at a faster speed V2 than the speed V1 of the upper elastomer E1.

In particular, when the converging passage F and finishing chamber G are directly coupled, the flow direction changes abruptly near the inlet of the finishing chamber G, and the sectional area of the finishing chamber G becomes narrow, and hence the passing resistance receiving from the head H is increased. As a result, the speed difference further increases, and distortion occurs between the two elastomers E1 and E2, and a misalignment is likely to occur in the dimensions of the extruded products. In this apparatus, moreover, since the passing resistance is large, a relatively high pressure must be applied in order to extrude the elastomers from the finishing chamber G, and when the pressure difference inside and outside the apparatus is higher, the expansion of the elastomer after extruding increases, and hence product precision is spoiled.

It is hence a primary object of the invention to provide an elastomer extruding apparatus which overcomes the above difficulties of the prior art which is capable of decreasing the passing resistance from the head, enhancing precision even in thin elastomer products, and forming products of high quality, maintaining stability of strength, without causing interlayer separation of elastomers.

According to one aspect of the present invention, an elastomer extruding apparatus comprises a head to which plural extruders for extruding elastomer material are linked, and a rotatable driven roller disposed at a front end of the head so as to form an extruding space between the roller and the front end of the head, the head having a passage arrangement through which the elastomer materials extruded from extruders pass, said passage arrangement having an opening communicating with the extruding space, and the extruding space has a uniform chamber through which the elastomer materials flow out from the opening pass while laminating and advance in the rotating direction together with the roller, and a finishing chamber communicating with the uniform chamber and forming the elastomer materials substantially into a final sectional shape by reducing the sectional height from the uniform chamber, characterised in that the uniform chamber has a principal part substantially uniform in sectional shape and the uniform chamber and the finishing chamber extend without any step.

The passage arrangement may comprise plural individual passages through which the elastomer materials from each extruders pass individually, and one converging passage extending from a convergent point of the plural individual passages and through which the elastomer materials from each individual passage passes while laminating together.

Also, the passage arrangement may comprise plural individual passages, through one of which the elastomer material from each extruder passes, opening into the extruding space individually. In this case, the principal part of the uniform chamber is formed between the finishing chamber and the opening closest to the finishing chamber among the openings of the plural individual passages.

An embodiment of the present invention will now be described, by way of example, referring to the attached diagrammatic drawings, in which:
Fig. 1 is a front view showing an elastomer extruding apparatus in a first embodiment of the invention;
Fig. 2 is a sectional view showing a head and a roller;
Fig. 3 (A) is a sectional view showing a passage arrangement and extruding space;
Fig. 3 (B) is a sectional view showing the passage arrangement and extruding space together with elastomer materials;
Fig. 4 is a perspective view showing a preformer die;
Fig. 5 is a sectional view showing a uniform chamber;
Fig. 6 is a perspective view showing a finishing chamber;
Fig. 7 (A) is a sectional view showing a sectional shape of elastomer material in an individual passage;
Fig. 7 (B) is a sectional view showing a sectional shape of elastomer material in a converging passage;
Fig. 7 (C) is a sectional view showing a sectional shape of elastomer material in a uniform chamber;
Fig. 8 is a sectional view showing an elastomer product formed by the apparatus;
Fig. 9 is a front view showing an elastomer extruding apparatus in a second embodiment of the invention;
Fig. 10 is a sectional view showing a head and a roller of the second embodiment;
Fig. 11 (A) is a sectional view showing a passage arrangement and extruding space of the second embodiment;
Fig. 11 (B) is a sectional view showing the passage arrangement and extruding space together with the elastomer materials of the second embodiment;
Fig. 12 is a perspective view showing a die set of the second embodiment;
Fig. 13 is a sectional view showing a uniform chamber of the second embodiment;
Fig. 14 is a perspective view showing a finishing chamber of the second embodiment;
Fig. 15 (A) is a sectional view showing a sectional shape of elastomer material in an individual passage of the second embodiment;
Fig. 15 (B) is a sectional view showing a sectional shape of elastomer material in a guide passage of the second embodiment;
Fig. 15 (C) is a sectional view showing a sectional shape of elastomer material in a uniform chamber of the second embodiment;
Fig. 16 is a sectional view showing other embodiment of the individual passage; and
Fig. 17 is a sectional view showing a prior art.

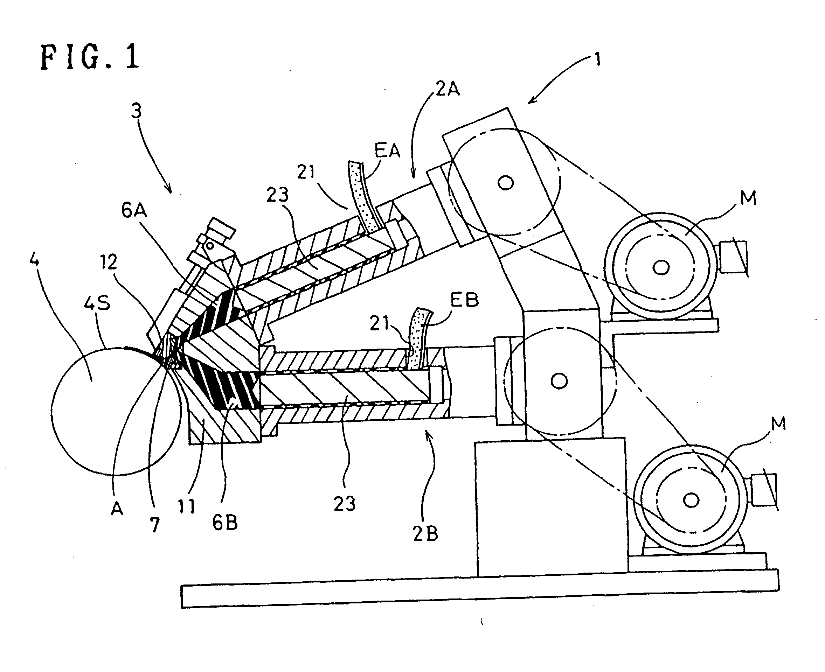

In the first embodiment of Figs. 1 to 7, an elastomer extruding apparatus 1 comprises, as shown in Fig. 1, plural, in this case two extruders 2A, 2B for extruding elastomer materials EA, EB, a head 3 to which the extruders 2A, 2B are coupled, and a roller 4 disposed at a small clearance from the head 3 so as to form an extruding space A between an outer circumference 4S of the roller 4 and a front end of the head 3.

The two extruders 2A and 2B are structured alike, and are provided so that their centreline cross obliquely in a vertical plane, and each output end is fixed to the head 3. The extruders 2A, 2B are of conventional design for kneading and fusing the elastomer materials EA, EB fed from an injection port 21 by rotation of a screw shaft 23 driven through a gear reducer by a motor M toward the head 3.

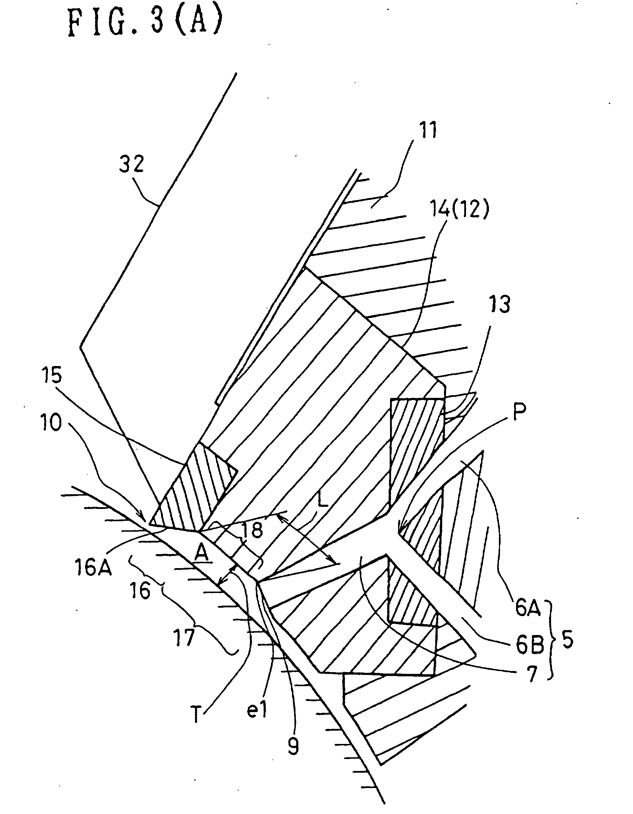

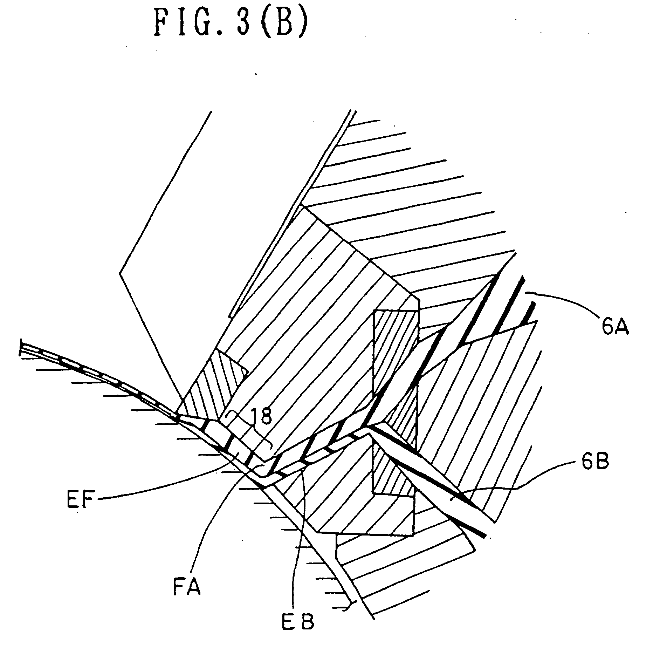

The head 3 comprises a base part 11 on which the extruders 2A, 2B are joined, and a die set 12 detachably fitted to the leading end of the base part 11. As can be seen in Fig. 3(A) the head 3 has a passage arrangement 5 communicating with the extruders 2A, 2B and extending forwards through the base part 11 and the die set 12, and the front of the passage arrangement 5 forms an opening 9 communicating with the extruding space A.

The passage arrangement 5 in this embodiment comprises a first individual passage 6A connected to the first extruder 2A, a second individual passage 6B connected to the second extruder 2B, and a convergent passage 7 joining the individual passages 6A, 6B. Therefore, the elastomer materials EA, EB are mutually laminated together from a convergent point P in the die set 12, then they pass together through the convergent passage 7.

Thus the individual passages 6A, 6B are formed in the base part 11, and the convergent point P and convergent passage 7 are formed in the die set 12. The extruding space A is formed between the die set 12 and the roller 4. Fig. 3 (B) shows the flow state of the elastomer materials in the extruding space A.

The convergent point P and its vicinity are formed in a preformer die 13 fitted detachably to the rear end of a die main body 14. By this detachable structure of the preformer die 13 it is easier to set the extruding shape and thus the dimensions of the elastomer materials EA, EB, and to adjust the pass-through speed in the passages 6A, 6B, and 7. As a result, the quality of the extruded products is much stabler.

The extruding space A comprises a uniform chamber 17 in which the elastomer materials flowing out of the opening 9 advances in the rotating direction together with the roller 4, and a finishing chamber 16 consecutive to the uniform chamber 17 for forming the elastomer materials substantially into its final sectional shape. The finishing chamber 16 is a small gap portion formed between a finishing die 15 attached to the die main body 14 and the roller 4. In this embodiment, an extruding end 10 for determining the product shape is fitted at the front edge of a slanted or sloping reducing portion 16A which decreases the sectional height in the rotating direction (extruding direction).

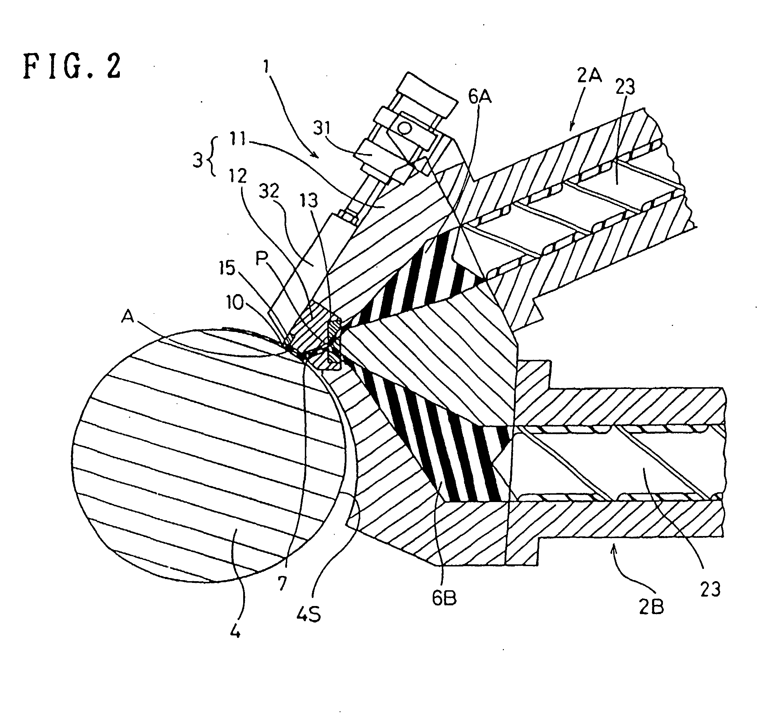

A clasp 32 is provided to hold the die main body 14 and the finishing die 15 together in the base part 11 of the head 3. The clasp 32 is fitted, as shown in Fig. 2, to the leading end of a rod of a cylinder 31 affixed to the base part 11, and the clasp 32 is moved back and forth by forward and backward movement of the rod. On forward movement of the rod, the clasp 32 abuts against the outward surfaces of the finishing die 15 and the die main body 14, and retains together both the finishing die 15 and the die main body 14. When the rod is half rectracted only the finishing die 15 can be dismounted. On fully retracting the rod, the die main body 14 can be dismounted together with the finishing die 15 and preformer die 13.

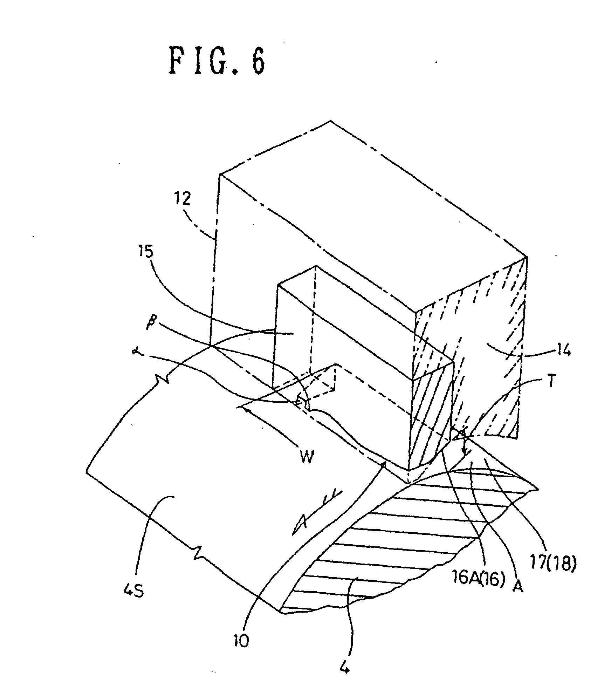

The roller 4 has a columnar or straight part having a length exceeding the maximum width W in the axial direction of the extruding space A as shown in Fig. 6, and is set at a constant clearance from the die set 12. In this embodiment, the columnar part is provided for the entire length of the roller 4, and hence the roller 4 is formed as a right circular cylinder. The roller 4 in this embodiment is driven and rotated in the counterclockwise direction, that is, to the left in Fig. 1.

Moreover, as shown in Fig. 3 (A), the uniform chamber 17 of the extruding space A has a principal part 18 provided between the edge e1, in the extruding direction, of the opening 9 and the reducing part 16A of the finishing chamber 16, and this principal part 18 is substantially uniform in sectional shape over the entire length.

Therefore, the elastomer material EA from the first individual passage 6A from the first extruder 2A and the elastomer material EB from the second individual passage 6B from the second extruder 2B are converged at the point P. At the downstream side of the convergent point P, after being laminated together, the laminate material EF passes through the convergent passage 7, and is extruded from the opening 9 into the extruding space A.

The laminate material EF flowing into the extruding space A, in the mutually laminated state of the elastomer materials EA, EB, passes through the uniform chamber 17, and is finally formed in the finishing chamber 16, thereby forming an elastomer product EG.

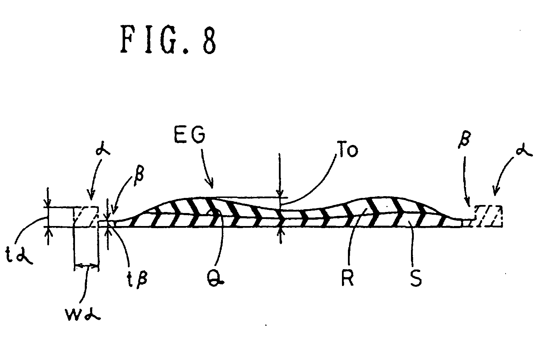

The elastomer product EG in this embodiment is a tire component, for example, an inner-liner rubber formed by laminating two kinds of elastomer material differing in properties, as shown in Fig. 8, to give an elastic body in a thin band form having a maximum thickness T0 of about 2.0 mm.

The upper layer R is formed by the first extruder 2A, and the lower layer S by the second extruder 2B. Incidentally, if the volume of the lower layer S is greater as compared with the upper layer R, then the screw shaft 23 of the second extruder main body 2B is designed larger than that of the first extruder 2A.

In the individual passages 6A, 6B, the sectional shape of each passage is varied downstream, and the elastomer materials EA, EB are thus both roughly formed while passing through their individual passages 6A and 6B.

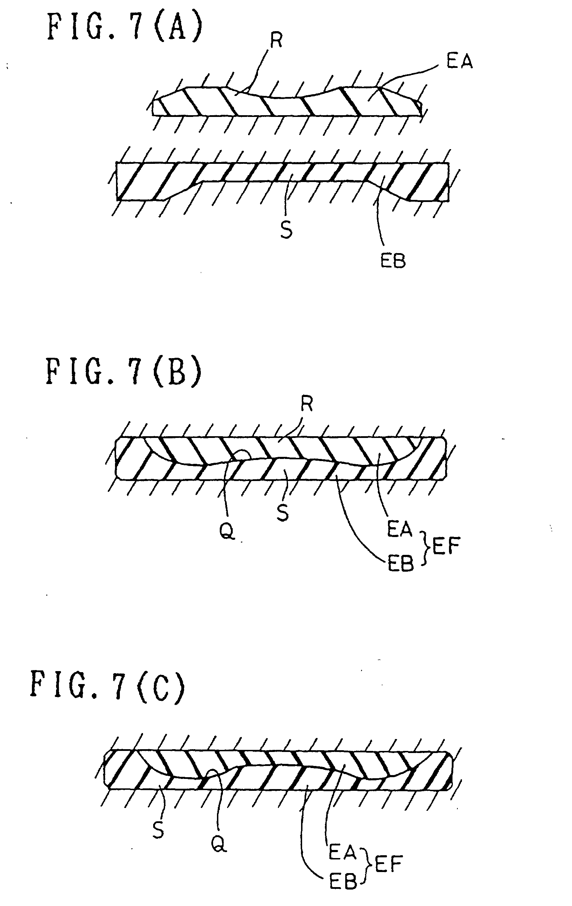

Figs. 7(A), 7(B), 7(C) show changes of sectional shape of elastomer materials in each passage.

Fig. 7(A) shows the sectional shape of the elastomer materials EA, EB when passing the inlet portion of the die set 12 of the individual passages 6A, 6B. At this time, the elastomer materials EA, EB are preformed in a sectional shape determined in consideration of the ratio of the thickness occupying in the product.

Fig. 7 (B) shows the sectional shape of the elastomer materials EA, EB when passing the convergent passage 7. In the convergent passage 7, the elastomer materials EA, EB are laminated together by the internal pressure applied by the extruders, and hence the boundary surface Q of the laminate material EF is adhered strongly.

Fig. 7 (C) shows the sectional shape of the laminate material EF in the uniform chamber 17, and in this embodiment it is nearly the same as the sectional shape at the opening 9 of the convergent passage 7.

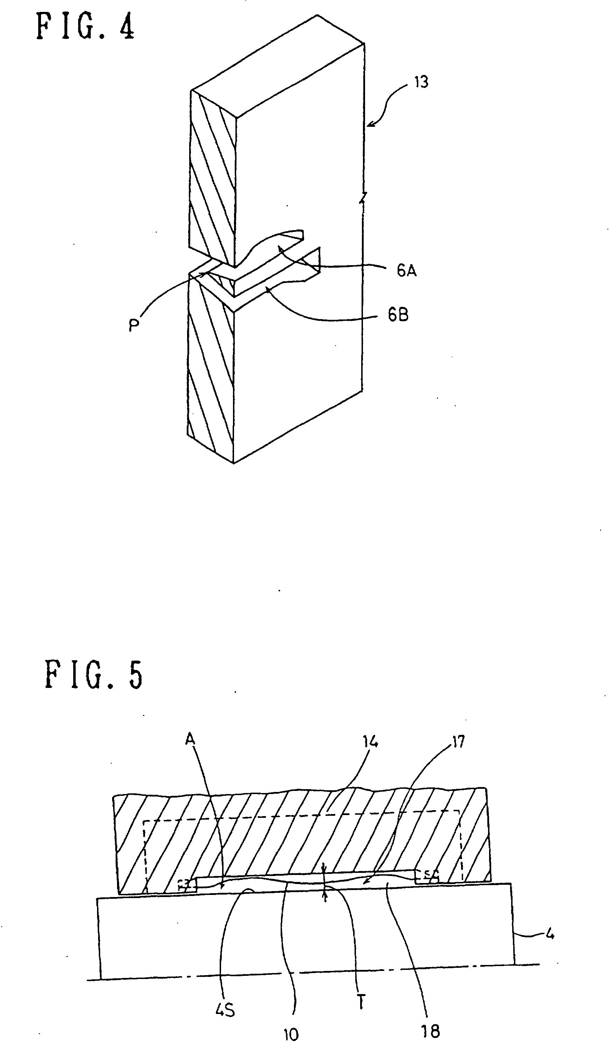

Since one side (the lower side) of the uniform chamber 17, as shown in Fig. 5, is formed by the outer circumference 4S of the roller 4, the laminate material EF moves being pulled by the rotation of the roller 4. At this time, since the uniform chamber 17 has a uniform sectional shape and extends in the length L more than 1.5 times the sectional height T of the principal part 18, the force of resistance to passing from the other stationary side (upper side) is lessened while passing through the uniform chamber 17. As a result, the feed speed between the elastomer materials EA, EB is nearly same, and the laminate material EF enters from the uniform chamber 17 into the finishing chamber 16 in a stable condition, so that distortion at the boundary surface Q is suppressed.

The tensile force by the roller 4 acts over the entire length of the uniform chamber 17, and it provides pushing force. As a result, while keeping the inner pressure of the apparatus low, it is possible to extrude the elastomer materials easily from the extruding end 10. By reduction of internal pressure of the apparatus, moreover, expansion of the elastomer product EG due to the reduction of pressure after extrusion from the extruding end 10 is reduced. Thus shape changes due to this expansion are slight, and an elastomer product EG results of high quality excellent in dimensional precision and adhesive force between the laminations. This reduction of internal pressure of the apparatus, also contributes to a reduction of internal temperature, so that rubber scorching is prevented, material properties are maintained in favourable state, and dimensional stability is improved.

In this embodiment, the length L of the principal part 18 of the uniform chamber 17 is 1.5 or more times the sectional height T of the principal part 18, so as to provide an effective tensile force on the laminate material EF. If less than 1.5 times, such an effect is not found. The upper limit of the length L is preferred to be 150 mm or less. If greater, further improvement of the effect does not occur, but the head 3 becomes larger in size, and cost increases, and working efficiency drops. More preferably, it should be 100 mm or less.

Incidentally, in this embodiment, in the shape of the extruding end 10 of the finishing die 15, as shown in Fig. 6, a bulge (α) is formed through a thin wall portion (β) at both sides in the width direction.

As the elastomer material passes through the finishing die 15, it is extruded into a shape including bulges (α), and thin wall portions (β) as indicated by single a dot chain line in Fig. 8, and by subsequently cutting off the thin wall portion (β) by a knife or other cutting tool, the width dimension of the elastomer product EG can be set precisely.

The width dimension Wα of the bulge (α) is preferred to be 5 to 25 mm. If it is less than 5 mm, it is likely to be torn off when removing the bulge (α), or if it exceeds 25 mm, the removed elastomer is large and the weight of the elastomer materials EA, EB increases when extruding, and hence it is disadvantageous to the working efficiency.

The thickness tβ of the thin wall portion (β) is preferred to be 2.5 mm or less in consideration of ease of cutting. The height tα of the bulge (α) is preferably 1.5 times to 5.0 times the thickness t-β, and if less than 1.5 times the thickness tβ, the bulge (α) is likely to be torn off when removing, and if exceeding 5.0 times the thickness tβ, the yield of the elastomer material increases, and the working efficiency drops.

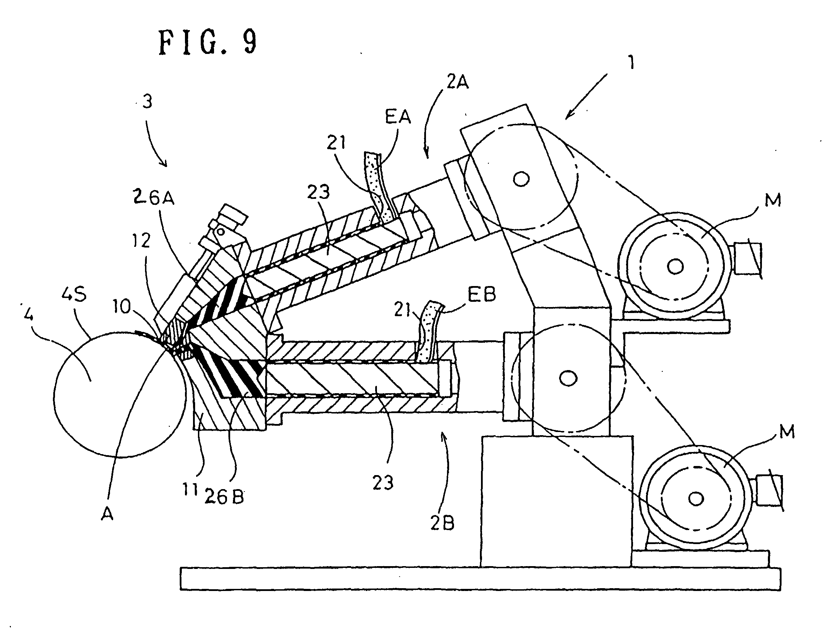

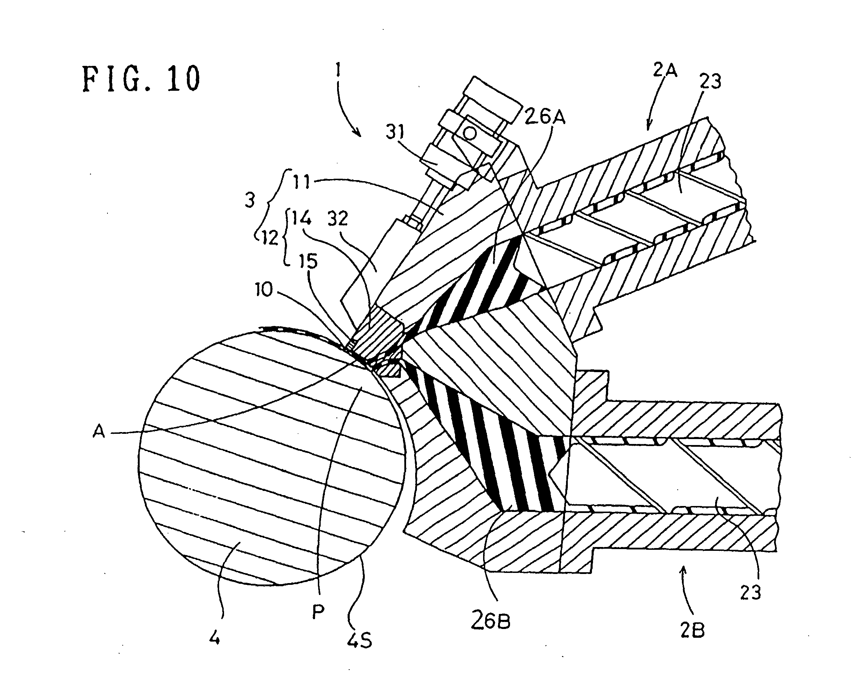

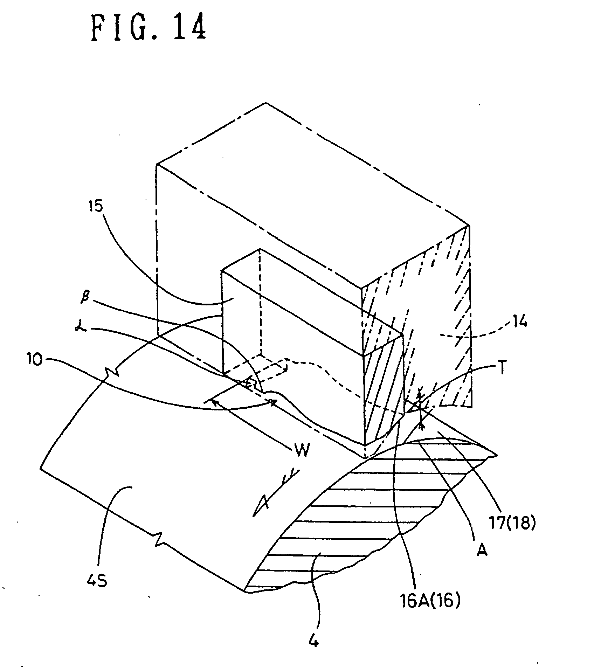

A second embodiment of the elastomer extruding apparatus 1 is illustrated in Fig. 9 to Fig. 15 (C).

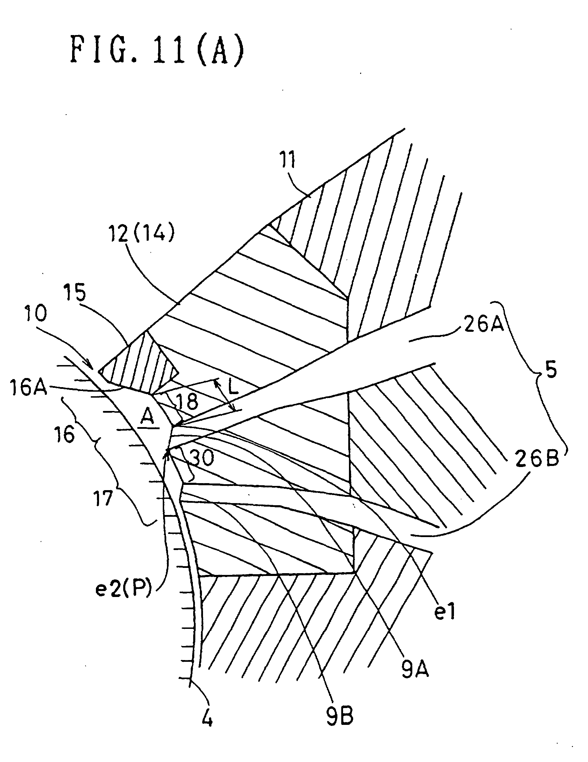

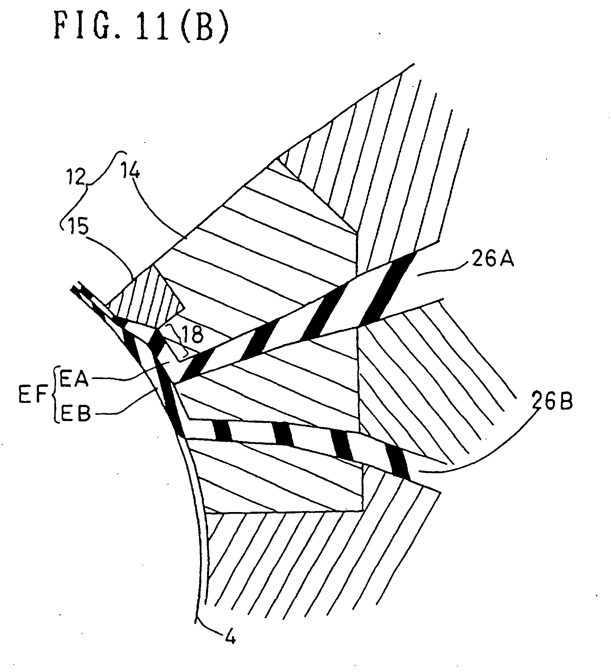

As shown in Fig. 11 (A) , in the elastomer extruding apparatus 1 in the second embodiment, the passage arrangement 5 is composed only of the individual passages 26A, 26B for individually passing the elastomer materials EA, EB extruded from the extruders 2A, 2B. The individual passages 26A, 26B extend through the base part 11 and the die set 12, and openings 9A, 9B are formed at the front end so as to open against the roller 4 and communicate with the extruding space A.

The die set 12 is composed of the die main body 14 forming the individual passages 26A, 26B and the uniform chamber 17, and the finishing die 15 for forming the finishing chamber 16.

The uniform chamber 17 in the extruding space A has a principal part 18 between the opening closer to the finishing chamber 16 among the openings 9A, 9B, the opening 9A and the finishing chamber 16. More specifically, the principal part 18 is formed from the edge e1, in the extruding direction, of the opening 9A to the reducing part 16A the same as in the preceding embodiment, and this principal part 18 is substantially uniform in sectional shape over its entire length.

Moreover, in the uniform chamber 17, another edge e2 of the opening 9A forms a convergent point P where the elastomer materials EA, EB are converged. In this embodiment, by forming a clearance between the openings 9A, 9B, the uniform chamber 17 has a guide path 30 for connecting the opening 9B and the principal part 18, between the convergent point P and opening 9B.

Therefore, the elastomer materials EA, EB extruded from the first and second extruders 2A, 2B pass through the individual passages 26A, 26B, and meet at the convergent point P in the uniform chamber 17, and then pass through the principal part 18 while laminating together.

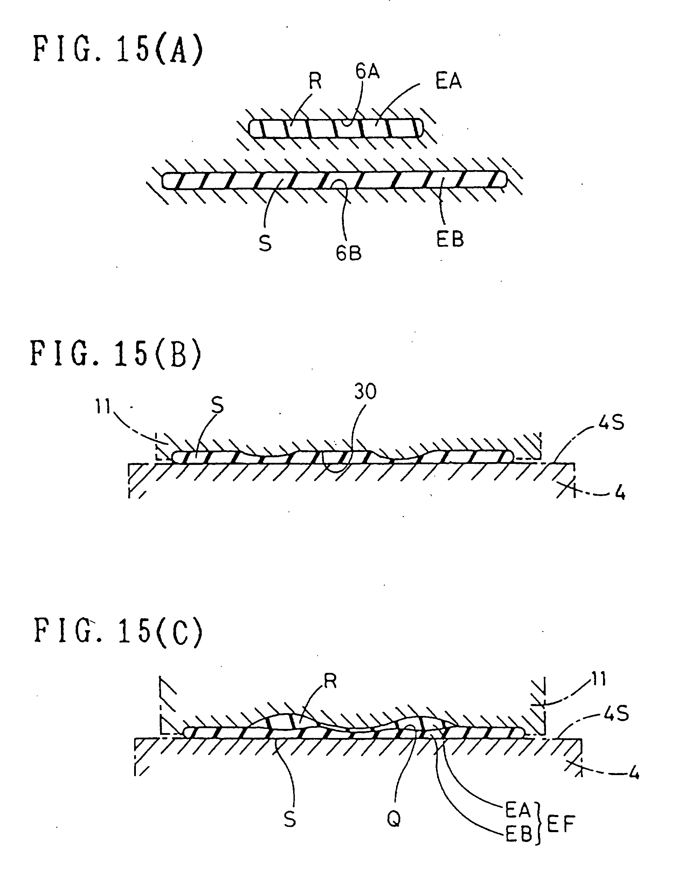

Figs. 15(A), 15(B), 15(C) show the change of sectional shape of the elastomer materials in each passage.
Fig. 15(A) shows the sectional shape at the inlet portion of the die main body 14. Herein, the elastomer materials EA, EB are formed in a flat rectangular section, and it is further reduced while passing through the die main body 14.

Fig. 15(B) shows the sectional shape of the elastomer material EB when passing through the guide path 30. In this guide path 30, it is preformed into a sectional shape determined in consideration of the ratio of the thickness of the elastomer materials EA, EB occupying in the product, that is, a shape similar to the sectional shape of the elastomer EB in the product. This preforming may be done at any position in the convergent point P, guide path 30, opening 9B, or near the leading end of the individual passage 26B if it is upsteam of the convergent point P.

Fig. 15 (C) shows the sectional shape of the laminate material EF in the principal part 18. At the convergent point P, the elastomer material EB flowing in the guide path 30 is laminated with the elastomer material EA flowing in the first individual passage 26A. The sectional shape of the elastomer material EA is also preformed at the upstream of the convergent point P, for example, in the opening 9A or near the leading end of the individual passage 26A, and is then laminated.

Thus, in the second embodiment, the preformed elastomer material EA is placed on the elastomer material EB and moved by the roller by passing through the guide path 30, and the laminate material EF is formed. That is, under the effect of the roller 4, the elastomer materials are laminated, and hence the distortion of the boundary surface Q is suppressed as compared with the case of placing the preliminarily joined laminate material EF under the effect of the roller 4.

Since the uniform chamber 17 has a uniform sectional shape, the passing resistance received from the head 3 is lessened, and the feed speed of the elastomer materials EA, EB is nearly same, and moreover the changes of flow direction near the inlet of the finishing chamber 16 are also prevented, so that the distortion of the boundary surface Q may be further suppressed.

As in the first embodiment, the tensile force from the roller 4 also functions effective to assist the extruding force in the second embodiment, so that the internal pressure of the apparatus can be set low.

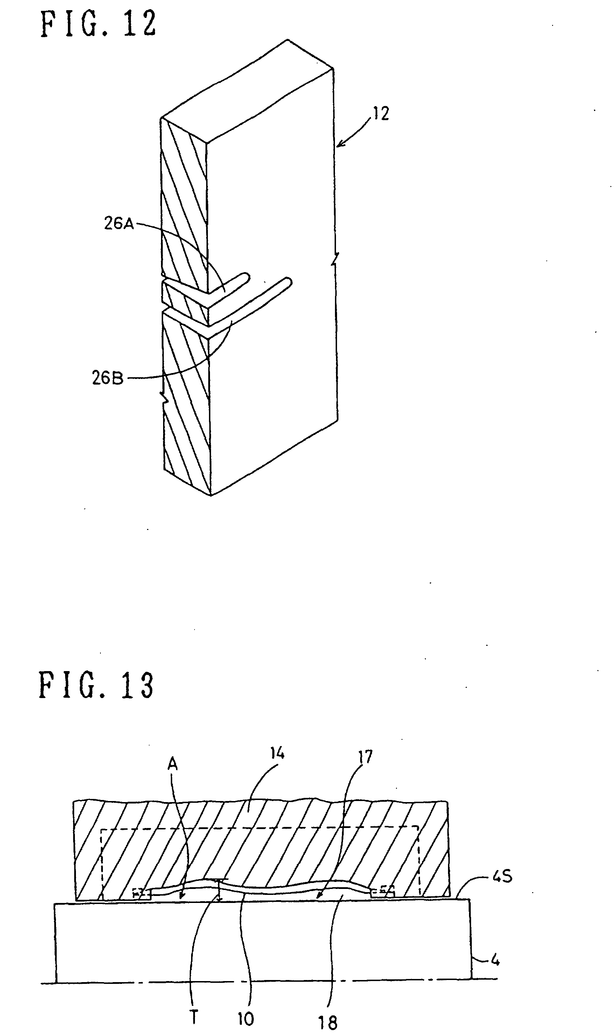

The length L of the principal part 18 of the uniform chamber 17 is, as in the first embodiment, 1.5 or more of the sectional height T of the principal part 18, but the principal part 18 in this embodiment is not a rectangular shape as shown in Fig. 15 (C), and hence the maximum height of the section is taken as the sectional height T as shown in Fig. 13.

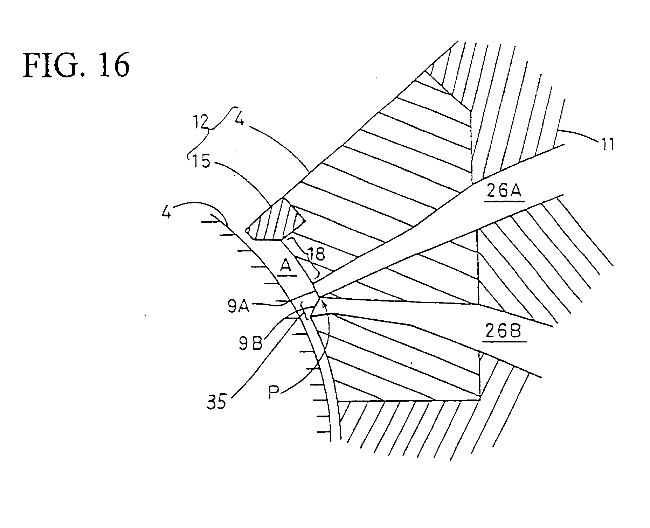

Another embodiment of the individual passages 26A, 26B is shown in Fig. 16. In the diagram, the first and second individual passages 26A, 26B are adjacent to each other without clearance at the convergent point P, and the guide path 30 is omitted. Also in this case, since the elastomer material EB in the individual passage 26B precedes the elastomer material EA by at least a distance 35 so as to contact the roller 4, the elastomer material EB is moved, thereby suppressing distortion of the boundary surface Q.

## Claims

1. An elastomer extruding apparatus comprising a head (3) to which plural extruders (2A,2B) for extruding elastomer material are linked, and a rotatable driven roller (4) disposed at a front end of the head (3) so as to form an extruding space (A) between the roller and the front end of the head (3), the head (3) having a passage arrangement (5) through which the elastomer materials (EA,EB) extruded from extruders (2A,2B) pass, said passage arrangement (5) having an opening (9) communicating with the extruding space (A), and the extruding space (A) has a uniform chamber (17) through which the elastomer materials (EA,EB) flow out from the opening (9) pass while laminating and advance in the rotating direction together with the roller (4), and a finishing chamber (16) communicating with the uniform chamber (17) and forming the elastomer materials (EA,EB) substantially into a final sectional shape by reducing the sectional height from the uniform chamber (17), **characterised in that** the uniform chamber (17) has a principal part (18) substantially uniform in sectional shape and the uniform chamber (17) and the finishing chamber (16) extend without any step.

2. An elastomer extruding apparatus of claim 1, **characterised in that** the principal part (18) of the uniform chamber (17) has a length (L) at least 1.5 times the sectional height (T) of the principal part (18).

3. An elastomer extruding apparatus of claim 1 or 2, **characterised in that** the passage arrangement (5) of the head (3) comprises plural individual passages (6A,6B) through which the elastomer materials (EA,EB) extruded from each extruders (2A,2B) pass separately, and one convergent passage (7) extending from a convergent point (P) of the plural individual passages (6A,6B) and through which the elastomer materials (EA,EB) of the individual passages (6A,6B) pass while being laminated together.

4. An elastomer extruding apparatus of claim 1, **characterised in that** the passage arrangement (5) of the head (3) comprises plural individual passages (26A,26B) through which the elastomer materials (EA,EB) extruded from each extruders (2A,2B) pass individually, each of the plural individual passages (26A,26B) having an opening (9A,9B) communicating with the extruding space (A), and the principal part (18) of the uniform chamber (17) is formed between the finishing chamber (16) and the opening (9A) closest to the finishing chamber (16) among the openings (9A,9B) of the plural individual passages (26A,26B).

5. An elastomer extruding apparatus of claim 3, **characterised in that** the head (3) comprises a base part (11) for forming the individual passages (6A,6B), and a die set (12) for forming the convergent point (P), convergent passage, and extruding space (A).

6. An elastomer extruding apparatus of claim 5, **characterised in that** the die set (12) comprises a preformer die (13) for forming the convergent point (P), a die main body (14) for forming the convergent passage (7) and uniform chamber (17), and a finishing die (15) for forming the finishing chamber (16).

7. An elastomer extruding apparatus of claim 4, **characterised in that** the head (3) comprises a base part (11) for forming the individual passages (26A,26B) and a die set (12) comprising a die main body (14) for forming a part of the individual passages (26A,26B) and a uniform chamber (17), and a finishing die (15) for forming the finishing chamber (16).

## Patentansprüche

1. Extrusionsvorrichtung für Elastomere, umfassend einen Kopf (3), mit dem mehrere Extruder (2A, 2B) zum Extrudieren von Elastomermaterial verbunden sind, und eine drehbar angetriebene Walze (4), die an einem vorderen Ende des Kopfes (3) angeordnet ist, um einen Extrusionsraum (A) zwischen der Walze und dem vorderen Ende des Kopfes (3) zu bilden, wobei der Kopf (3) eine Kanalanordnung (5) aufweist, durch die die Elastomermaterialien (EA, EB), die aus den Extrudern (2A, 2B) extrudiert werden, hindurchtreten, wobei die Kanalanordnung (5) eine Öffnung (9) aufweist, die mit dem Extrusionsraum (A) in Verbindung steht, und der Extrusionsraum (A) eine gleichförmige Kammer (17) aufweist, durch die die Elastomermaterialien (EA, EB), die aus der Öffnung (9) herausströmen, hindurchtreten, während sie laminieren und in der Drehrichtung zusammen mit der Walze (4) vorrücken, und eine Endbearbeitungskammer (16), die mit der gleichförmigen Kammer (17) in Verbindung steht und die Elastomermaterialien (EA, EB) im wesentlichen zu einer abschließenden Querschnittsform ausbildet, indem die Querschnittshöhe von der gleichförmigen Kammer (17) reduziert wird, **dadurch gekennzeichnet, daß** die gleichförmige Kammer (17) einen Hauptteil (18) besitzt, der eine im wesentlichen gleichförmige Querschnittsgestalt aufweist, und die gleichförmige Kammer (17) und die Endbearbeitungskammer (16) sich ohne jede Stufe erstrecken.

2. Extrusionsvorrichtung für Elastomere nach Anspruch 1, **dadurch gekennzeichnet, daß** der Hauptteil (18) der gleichförmigen Kammer (17) eine Länge (L) von mindestens dem 1,5fachen der Querschnittshöhe (T) des Hauptteils (18) aufweist.

3. Extrusionsvorrichtung für Elastomere nach Anspruch 1 oder 2, **dadurch gekennzeichnet, daß** die Kanalanordnung (5) des Kopfes (3) mehrere einzelne Kanäle (6A, 6B), durch die die Elastomermaterialien (EA, EB), die aus jedem Extruder (2A, 2B) extrudiert werden, separat hindurchtreten, und einen konvergenten Kanal (7) umfaßt, der sich von einem Konvergenzpunkt (P) der mehreren einzelnen Kanäle (6A, 6B) erstreckt und durch den die Elastomermaterialien (EA, EB) der einzelnen Kanäle (6A, 6B) hindurchtreten, während sie aneinanderlaminiert werden.

4. Extrusionsvorrichtung für Elastomere nach Anspruch 1, **dadurch gekennzeichnet, daß** die Kanalanordnung (5) des Kopfes (3) mehrere einzelne Kanäle (26A, 26B) umfaßt, durch die die Elastomermaterialien (EA, EB), die aus jedem Extruder (2A, 2B) extrudiert werden, einzeln hindurchtreten, wobei jeder der mehreren einzelnen Kanäle (26A, 26B) eine Öffnung (9A, 9B) aufweist, die mit dem Extrusionsraum (A) in Verbindung steht, und der Hauptteil (18) der gleichförmigen Kammer (17) zwischen der Endbearbeitungskammer (16) und der Öffnung (9A) gebildet ist, die sich unter den Öffnungen (9A, 9B) der vielen einzelnen Kanäle (26A, 26B) am nächsten bei der Endbearbeitungskammer (16) befindet.

5. Extrusionsvorrichtung für Elastomere nach Anspruch 3, **dadurch gekennzeichnet, daß** der Kopf (3) ein Basisteil (11) zum Bilden der einzelnen Kanäle (6A, 6B) und einen Werkzeugsatz (12) zum Bilden des Konvergenzpunktes (P), des konvergenten Kanals und des Extrusionsraums (A) umfaßt.

6. Extrusionsvorrichtung für Elastomere nach Anspruch 5, **dadurch gekennzeichnet, daß** der Werkzeugsatz (12) ein Vorformwerkzeug (13) zum Bilden des Konvergenzpunktes (P), einen Werkzeughauptkörper (14) zum Bilden des konvergenten Kanals (7) und der gleichförmigen Kammer (17) und ein Endbearbeitungswerkzeug (15) zum Bilden der Endbearbeitungskammer (16) umfaßt.

7. Extrusionsvorrichtung für Elastomere nach Anspruch 4, **dadurch gekennzeichnet, daß** der Kopf (3) ein Basisteil (11) zum Bilden der einzelnen Kanäle (26A, 26B) und einen Werkzeugsatz (12) umfaßt, der einen Hauptwerkzeugkörper (14) zum Bilden eines Teils der einzelnen Kanäle (26A, 26B) und einer gleichförmigen Kammer (17) und ein Endbearbeitungswerkzeug (15) zum Bilden der Endbearbeitungskammer (16) umfaßt.

## Revendications

1. Appareil d'extrusion d'un élastomère, comportant une tête (3) à laquelle sont reliées plusieurs extrudeuses (2A, 2B) destinées à extruder un matériau élastomère, et un rouleau rotatif mené (4) disposé à une extrémité avant de la tête (3) et destiné à former un espace d'extrusion (A) entre le rouleau et l'extrémité avant de la tête (3), la tête (3) ayant un ensemble à passage (5) par lequel passent les matériaux élastomères (EA, EB) extrudés par les extrudeuses (2A, 2B), l'ensemble à passage (5) ayant une ouverture (9) qui communique avec l'espace d'extrusion (A), et l'espace d'extrusion (A) ayant une chambre uniforme (17) par laquelle les matériaux élastomères (EA, EB) s'écoulent vers l'extérieur par l'ouverture (9), passent avec stratification et avancent dans le sens de rotation avec le rouleau (4), et une chambre (16) de finition qui communique avec la chambre uniforme (17) et met les matériaux élastomères (EA, EB) pratiquement à la configuration finale en coupe par réduction de la hauteur en coupe à partir de la chambre uniforme (17), **caractérisé en ce que** la chambre uniforme (17) a une partie principale (18) de forme en coupe pratiquement uniforme, et la chambre uniforme (17) et la chambre de finition (16) s'étendent sans aucun gradin.

2. Appareil d'extrusion d'un élastomêre selon la revendication 1, **caractérisé en ce que** la partie principale (18) de la chambre uniforme (17) a une longueur (L) au moins égale à 1,5 fois la hauteur en coupe (T) de la partie principale (18).

3. Appareil d'extrusion d'un élastomère selon la revendication 1 ou 2, **caractérisé en ce que** l'ensemble à passage (5) de la tête (3) comporte plusieurs passages individuels (6A, 6B) par lesquels passent séparément les matériaux élastomères (EA, EB) extrudés par chaque extrudeuse (2A, 2B), et un passage convergent (7) qui s'étend depuis un point de convergence (P) des passages individuels (6A, 6B) et par lequel les matériaux élastomères (EA, EB) des passages individuels (6A, 6B) passent lorsqu'ils sont stratifiés.

4. Appareil d'extrusion d'un élastomère selon la revendication 1, **caractérisé en ce que** l'ensemble à passage (5) de la tête (3) comporte plusieurs passages individuels (26A, 26B) par lesquels passent individuellement les matériaux élastomères (EA, EB) extrudés par chaque extrudeuse (2A, 2B), chacun des passages individuels (26A, 26B) ayant une ouverture (9A, 9B) qui communique avec l'espace d'extrusion (A), et la partie principale (18) de la chambre uniforme (17) est réalisée entre la chambre de finition (16) et l'ouverture (9A) la plus proche de la chambre de finition (16) parmi les ouvertures (9A, 9B) des passages individuels (26A, 26B).

5. Appareil d'extrusion d'un élastomère selon la revendication 3, **caractérisé en ce que** la tête (3) comprend une partie de base (11) destinée à former les passages individuels (6A, 6B), et un ensemble à filière (12) destiné à former le point de convergence (P), le passage convergent et l'espace d'extrusion (A).

6. Appareil d'extrusion d'un élastomère selon la revendication 5, **caractérisé en ce que** l'ensemble à filière (12) comporte une filière (13) d'organe de mise en forme préalable destinée à former le point de convergence (P), un corps principal de filière (14) destiné à former le passage convergent (7) et la chambre uniforme (17), et une filière de finition (15) destinée à former la chambre de finition (16).

7. Appareil d'extrusion d'un élastomère selon la revendication 4, **caractérisé en ce que** la tête (3) comprend une partie de base (11) destinée à former les passages individuels (26A, 26B) et un ensemble à filière (12) comprenant un corps principal de filière (14) destiné à former une partie des passages individuels (26A, 26B) et une chambre uniforme (17), et une filière de finition (15) destinée à former la chambre de finition (16).
